# EUROPÄISCHE PATENTSCHRIFT

(11) **EP 3 212 378 B1**
(45) Veröffentlichungstag und Bekanntmachung des Hinweises auf die Patenterteilung: **19.02.2020**
(21) Anmeldenummer: 15787607.9
(22) Anmeldetag: 30.10.2015
(51) Int. Cl.: B29C 49/00, B65D 1/02

(54) **BEHÄLTER MIT SUPPORTRING**
CONTAINER COMPRISING A SUPPORT RING
CONTENANT MUNI D'UN ANNEAU DE MAINTIEN

(30) Priorität: 30.10.2014 CH 16672014
(43) Veröffentlichungstag der Anmeldung: 06.09.2017
(73) Patentinhaber: ALPLA Werke Alwin Lehner GmbH & Co. KG, 6971 Hard (AT)
(72) Erfinder: GRABHER, Markus, A-6890 Lustenau (AT)
(74) Vertreter: Riederer Hasler & Partner Patentanwälte AG
(86) Internationale Anmeldenummer: PCT/EP2015/075264
(87) Internationale Veröffentlichungsnummer: WO 2016/066807

(56) Entgegenhaltungen:
- FR-A1- 2 937 309
- US-A1- 2007 087 075
- US-A1- 2012 118 849

## Beschreibung

### Technisches Gebiet

Die Erfindung betrifft einen blasgeformten Behälter, nach dem Oberbegriff des Anspruchs 1, mit einem besonders ausgestalteten Supportring.

### Stand der Technik

Der maschinelle Transport von Behältern im Anschluss an deren Herstellung (Befüllung, Reinigung und Vorbereitung auf eine erneute Befüllung etc.) stellt besonders bei sehr leichten Behältern aus Plastik eine Herausforderung dar, weshalb geeignete Fördermittel insbesondere für die Getränkeindustrie und somit im Zusammenhang mit flaschenförmigen Behältern von Interesse sind.

Es ist bekannt, Flaschen mit einem Supportring auszustatten, der die automatische Handhabung derselben erleichtert. Beim Supportring handelt es sich um einen ringförmigen, den Flaschenhals umgebenden und mit diesem verbundenen Vorsprung, der zuweilen auch als Haltekragen bezeichnet wird. Er erlaubt es, dass Fördermittel unter den Supportring greifen und die Flasche so in hängendem Zustand transportieren können.

Oft sind entsprechende Fördermittel durch zwei parallele, den Förderweg definierende Stützelemente, z.B. in der Form parallel geführter Bänder oder Ketten, gekennzeichnet, auf denen der Supportring während des Transports an zwei einander in Bezug auf den Behälter gegenüberliegenden Stellen aufliegt. Die Stützelemente bilden zwischen sich einen Transportkanal zur Aufnahme des Flaschenhalses. Alternative Fördermittel können sich entlang eines Transportweges bewegende U-förmige Hängeelemente umfassen, die den Flaschenhals umgreifen und den Supportring untergreifen.

Supportringe müssen also ausreichend stabil sein, um das Gewicht des Behälters in leerem und allenfalls auch in gefülltem Zustand zu tragen. Massiv ausgebildete Supportringe, wie sie bei Flaschen meist anzutreffen sind, gewährleisten eine solche Stabilität. Bei durch Blasformen hergestellten Behältern dieser Art werden der Hals und der Supportring nicht geblasen.

Es kann jedoch auch vorgesehen sein, dass nicht nur der Behälterkörper sondern auch der Behälterhals einschliesslich des Supportrings durch Blasformen erzeugt wird. In diesem Fall ist der Supportring eine Ausbuchtung der Behälterwand und somit hohl. Supportringe dieser Art sind weniger stabil.

Im Prüfungsverfahren wurden folgende Dokumente zitiert: FR2937309A1, US2007/087075A1 und US2012/118849A1, die jeweils Behälter mit einem zusätzlichen Ring im Halsbereich zeigen. Dokument US2007/0807075A1 offenbart einen Behälter nach dem Oberbegriff des Anspruchs 1.

### Aufgabe der Erfindung

Es ist eine Aufgabe der vorliegenden Erfindung, einen Behälter mit einem blasgeformten aber dennoch stabilen Supportring bereitzustellen. Weitere Vorteile und Ziele der vorliegenden Erfindung ergeben sich aus der nachfolgenden Beschreibung.

### Darstellung der Erfindung

Die oben genannte Aufgabe wird gelöst durch einen Behälter nach Anspruch 1.

Nachfolgend werden Merkmale beschrieben, wobei diese (individuell) als bevorzugte Merkmale zu betrachten sind, auch wenn sie nicht explizit als solche bezeichnet werden. Die Merkmale seien separat (als Teil eines beliebigen Behälters) und - soweit sie sich nicht ausschliessen - in beliebiger Kombination offenbart. Dies schliesst die Möglichkeit der gleichzeitigen Verwirklichung aller beschriebenen Merkmale ein.

Hals und Körper des Behälters sind miteinander verbunden und zweckmässigerweise einstückig ausgebildet, einschliesslich des Supportrings.

Der Behälter ist aus Kunststoff hergestellt, wobei es sich beim Kunststoff zum Beispiel um einen oder eine Kombination aus mehreren (insbesondere eine Mischung oder ein mehrschichtiger Aufbau aus mehreren) der folgenden handeln kann: PE (Polyethylen), insbesondere HDPE ("high-density polyethylene"); PP (Polypropylen); oder andere, zum Extrusionsblasen geeignete Kunststoffe.

Der vorgeschlagene Behälter ist durch ein Blasformverfahren hergestellt, insbesondere durch ein Extrusionsblasformverfahren.

Jedenfalls der Supportring und der Körper des Behälters sind blasgeformt, wobei dies auch für den Rest des Halses gelten kann.

Falls am Hals zusätzlich Befestigungsmittel (z.B. ein Gewinde) für die Befestigung eines Deckels an der Ausgiessöffnung vorgesehen sind, welche die Form von Vorsprüngen und/oder Vertiefungen aufweisen können, dann sind mit Vorteil auch diese Befestigungsmittel blasgeformt.

Der Deckel kann dazu ausgebildet sein, im über die Befestigungsmittel mit dem Hals verbundenen Zustand die Ausgiessöffnung ganz oder teilweise zu verschliessen.

Der Supportring ist üblicherweise zwischen der Ausgiessöffnung und dem Körper angeordnet, vorzugsweise am Übergang zwischen Hals und Körper des Behälters.

Sind Befestigungsmittel zur Befestigung eines Deckels vorgesehen, so sind diese vorzugsweise zwischen der Ausgiessöffnung und dem Supportring angeordnet.

Es ist zweckmässigerweise vorgesehen, dass der Supportring zumindest in dem Sinne ringförmig ist, dass er den Hals umgibt und/oder umschliesst. Der Hals kann im Schnitt (parallel zur Ebene in der der Supportring liegt) z.B. rund oder eckig sein.

Der Supportring weist eine dem Hals und/oder der Ausgiessöffnung zugewandte Seite ("Oberseite") und eine dieser in Bezug auf den Supportring gegenüberliegende, dem Körper des Behälters zugewandte Seite ("Unterseite") auf. Die beiden Seiten werden zur Unterscheidung als Oberseite respektive Unterseite bezeichnet. Der Abstand zwischen Oberseite und Unterseite des Supportrings wird als Höhe des Supportrings bezeichnet.

Eine bevorzugte durchschnittliche Höhe des Supportrings (Einbuchtungen nicht mitgerechnet) beträgt mindestens 0,5 oder 1 oder 1,5 Millimeter und/oder höchstens 3,5 oder 3 oder 2,5 Millimeter.

Die die Oberseite und die Unterseite als äusserer Rand verbindende Seite des Supportrings wird unter Ausklammerung der Seiten der Einbuchtung als "Schmalseite" bezeichnet. Die Verwendung der Begriffe "Oberseite", "Unterseite" und "Schmalseite" dient lediglich der besseren Unterscheidbarkeit.

Die Übergänge von der Schmalseite zur Oberseite sowie von der Schmalseite zur Unterseite des Supportrings können gerundet sein. Ein bevorzugter Radius der Übergänge beträgt 0,5 bis 1 Millimeter (gemessen an der Aussenseite).

Zwischen den Einbuchtungen weist der Supportring einen in maximalem Abstand vom Hals entlang der Schmalseite verlaufenden "äusseren Rand" auf. Der Abstand des äusseren Randes vom Hals des Behälters wird als Breite des Supportrings bezeichnet.

Es kann vorgesehen sein, dass der Supportring eine maximale Breite von mindestens 1 oder 1,5 oder 2 und/oder höchstens 5 oder 4 oder 3 Millimetern aufweist.

Die Gerade, welche durch den Mittelpunkt des Supportrings verläuft und rechtwinklig zur Ebene ausgerichtet ist, in der der Supportring liegt, wird als "Mittelachse" bezeichnet.

Der Supportring ist als Ausformung oder Ausbuchtung der Behälterwand ausgebildet und hohl.

Der Supportring kann die Form eines Vorsprungs auf der Aussenseite der Behälterwand und/oder eines Vorsprungs, der sich von der Mittelachse weg erstreckt, aufweisen. Zweckmässigerweise existiert dann auf der Innenseite der Behälterwand in Bezug auf die Behälterwand gegenüberliegend eine korrespondierende Vertiefung. Die Höhe des Vorsprungs an einer Stelle entspricht der Breite des Supportrings an der besagten Stelle. Erstreckt sich die Einbuchtung über die gesamte Breite des Supportrings, d.h. bis zum Hals, so ist am Ort der Einbuchtung der Vorsprung und/oder die Vertiefung unterbrochen. Man könnte auch sagen, ein oder mehrere solcher Einbuchtungen unterteilen den Vorsprung und/oder die Vertiefung in eine Anzahl von Vorsprüngen und/oder Vertiefungen, die der Anzahl solcher Einbuchtungen entspricht. Zwei benachbarte Vorsprünge oder Vertiefungen können in diesem Fall jeweils durch eine solche Einbuchtung voneinander getrennt sein.

Der Supportring umgibt den Hals vollständig.

Der Supportring hat nach einer bevorzugten Variante eine im Wesentlichen kreisringförmige Gestalt. Der Innenkreis des Kreisrings bildet den Übergang zum Hals, während der Aussenkreis den äusseren Rand des Supportrings definiert.

Es ist vorgesehen, dass der Supportring eine oder mehrere Einbuchtungen (d.h. eine oder mehrere Lücken) aufweist, die sich vom äusseren Rand des Supportrings in Richtung des Halses erstrecken. Eine oder mehrere solche Einbuchtungen führen zu einer Versteifung des Supportrings und tragen damit zu dessen Stabilität bei.

Die Einbuchtung bzw. jede der Einbuchtungen erstreckt sich zweckmässigerweise über die gesamte Höhe des Supportrings. Dadurch kann unter Anderem auf der Oberseite des Supportrings vorhandenes Wasser besser vom Supportring abfliessen.

Darüber hinaus kann vorgesehen sein, dass sich die Einbuchtung bzw. jede derEinbuchtungen über mindestens 30, 50 oder 70 Prozent der Breite des Supportrings erstreckt. Gemäss der Erfindung erstreckt sich die Einbuchtung bzw. jede der einen oder mehreren Einbuchtungen über die gesamte Breite des Supportrings, d.h. bis zum Hals. Damit kann der Grund der einen oder mehreren Einbuchtungen ansatzlos in den Hals übergehen oder auch im Hals aufgehen. In dieser Ausgestaltung, wenn mindestens zwei Einbuchtungen vorhanden sind, die sich bis zum Hals erstrecken, kann der Supportring durch sich quer zur Längserstreckungsrichtung des Halses erstreckende Sektoren gebildet sein.

Der Supportring bildet (z.B. infolge des zur Herstellung des Behälters verwendeten Extrusionsblasformverfahrens) einen Hohlraum aus, der an einer Innenseite des Halses mündet und dort im Wesentlichen einen Schlitz ausbildet. Wenn sich mehrere Einbuchtungen über die gesamte Breite des Supportrings, d.h. bis zum Hals erstrecken, so ist der Schlitz entlang der Innenseite des Halses durch die Einbuchtungen in mehrere Einzelschlitze unterteilt. An den Stellen, an denen sich die Einbuchtungen bis zum Hals erstrecken, ist die Innenkontur des Behälters zumindest im Wesentlichen fluchtend mit in Längserstreckungsrichtung des Halses benachbarten Stellen. Dort ist also an der Innenkontur des Halses keine Ausbuchtung ausgebildet.

Die Einbuchtung bzw. jede der Einbuchtungen kann sich über höchstens 30,15 oder 10 Prozent und/oder mindestens 3, 5 oder 8 Prozent des Umfangs des Supportrings und/oder des Umfangs des Halses erstrecken.

Gemäss einer Variante weist die Einbuchtung sich in Richtung des Halses erstreckende Seiten auf. Die Seiten der einen oder mehreren Einbuchtungen schliessen sich vorzugsweise an den äusseren Rand des Supportrings an.

Die Seiten der einen oder mehreren Einbuchtungen können im Schnitt parallel zur Mittelachse des Supportrings gerade und/oder plan ausgebildet sein, und zwar über eine Strecke, die vorzugsweise mindestens 20, 30 oder 50 Prozent der Höhe des Supportrings entspricht. Alternativ könnte man die genannten Seiten auch als im Wesentlichen flach bezeichnen.

Es ist von Vorteil, wenn sich im Wesentlichen in Längserstreckungsrichtung des Halses erstreckende Seiten der einen oder mehreren Einbuchtungen wenigstens in Teilbereichen im Wesentlichen plan ausgebildet sind, und zwar bevorzugt über im Wesentlichen die ganze Höhe des Supportrings, da hierdurch Kräfte, die in Längserstreckungsrichtung des Halses wirken wie beispielsweise Prellkräfte beim Montieren von Verschlüssen aufgenommen werden können.

Die Übergänge von den Seiten der einen oder mehreren Einbuchtungen zur Oberseite des Supportrings und von den Seiten der einen oder mehreren Einbuchtungen zur Unterseite des Supportrings können gerundet sein. Ein bevorzugter Radius der Übergänge beträgt zwischen 0,5 und etwa 2 Millimeter, bevorzugt zwischen 0,5 und etwa 1 Millimeter. Um die Stabilität gegen axiale Kräfte zu erhöhen, können die Übergänge auch scharfkantig ausgebildet sein, wobei im Sinne dieser Beschreibung unter "scharfkantig" ein Radius zwischen etwa 0,2 und 0,5 Millimeter zu verstehen ist. Auch diese in diesem Absatz genannten Werte sind an der Aussenseite gemessen.

Sind die Seiten der einen oder mehreren Einbuchtungen in dieser Weise geformt, bewirken sie eine Versteifung des Supportrings.

Die sich in Richtung des Halses erstreckenden Seiten der einen oder mehreren Einbuchtungen können mit Vorteil in einem Winkel zum Hals (insbesondere in einem Winkel zu einer Tangente an den Hals) stehen, der kleiner als 60 Grad ist und/oder in einem Winkel zueinander stehen, der grösser als 60 Grad ist. Diese Formgebung erleichtert die Herstellung der einen oder mehreren Einbuchtungen.

Besonders bevorzugt weist der Supportring zusätzlich zur beschriebenen einen Einbuchtung mindestens 1, 2 oder 3 und/oder höchstens 10, 8 oder 7 weitere Einbuchtungen auf.

Die Einbuchtung und die weiteren Einbuchtungen sind vorzugsweise in regelmässigen Abständen voneinander entlang des Supportrings angeordnet.

Die Einbuchtungen können sich mit Vorteil in Summe über höchstens 50, 40 oder 30 Prozent des Umfangs des Halses und/oder des Supportrings erstrecken.

Ist in diesem Dokument ein Objekt (z.B. eine Einbuchtung) erwähnt, so schliesst dies nicht das Vorhandensein zusätzlicher Objekte derselben Art aus. Anders ausgedrückt seien bei Erwähnung eines Objekts jeweils "mindestens ein" solches Objekt und "ein oder mehrere" solche Objekte offenbart. Eine, zwei, drei oder mehr oder sogar alle der zusätzlichen Objekte können optional dieselben Merkmale wie das eine Objekt aufweisen.

Die nachfolgenden Patentansprüche seien zusätzlich jeweils mit einem Rückbezug auf jeden beliebigen der vorhergehenden Patentansprüche ("nach einem der vorhergehenden Ansprüche") offenbart, auch wenn sie nicht in dieser Form beansprucht sind.

### Kurze Beschreibung der Zeichnungen

Es zeigen in schematischer Darstellung:
- Fig. 1: eine perspektivische Ansicht eines Behälters;
- Fig. 2: eine Seitenansicht des Behälters aus Fig. 1;
- Fig. 3: eine Draufsicht auf den Behälter aus Fig. 1; und
- Fig. 4: eine Seitenansicht des Halses des Behälters aus Fig. 1.

### Ausführung der Erfindung

Die Erfindung wird nachfolgend anhand der Zeichnungen beispielhaft erläutert.

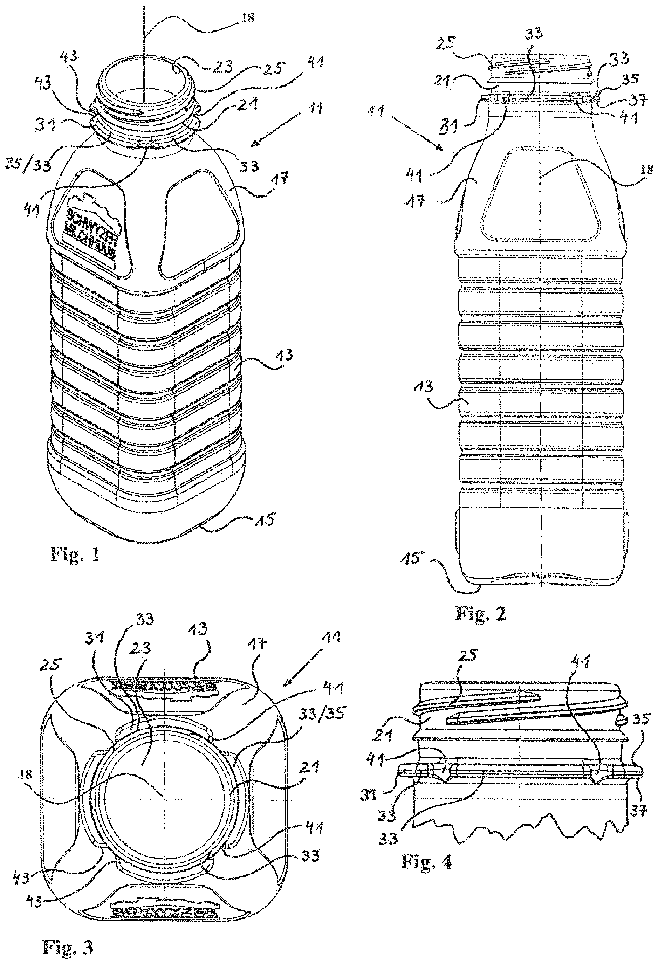

Die Fig. 1 bis 4 zeigen einen Behälter 11 mit einem Körper 13 und einem Hals 21, wobei in Fig.4 nur der Hals 21 dargestellt ist.

Der Behälter 11, im gezeigten Beispiel in Form einer Flasche, ist durch ein Blasformverfahren, insbesondere durch Extrusionsblasformen, hergestellt. Er kann beispielsweise zur Aufnahme fliessfähiger Stoffe wie Flüssigkeiten oder Pulver geeignet sein, wobei der Behälter 11 zur Abgabe seines Inhalts nach aussen eine Ausgiessöffnung 23 aufweist.

Die Ausgiessöffnung 23 ist am Hals 21 angeordnet und zweckmässigerweise durch einen (nicht dargestellten) Deckel verschliessbar. Zur Befestigung eines solchen Deckels an der Ausgiessöffnung 23 kann der Hals 21 Befestigungsmittel z.B. in der Form von Vorsprüngen und/oder Vertiefungen aufweisen, insbesondere in der Form eines Gewindes 25. Der Deckel könnte in diesem Fall mit dazu korrespondierenden Befestigungsmitteln z.B. in der Form von Vorsprüngen und/oder Vertiefungen ausgestattet sein, die dazu ausgebildet sind, mit denjenigen am Hals zur formschlüssigen Verbindung des Deckels an der Ausgiessöffnung 23 zusammenzuwirken. Die Vorsprünge 25 und/oder Vertiefungen am Hals 21 können optional ebenfalls blasgeformt und/oder als hohle Ausbuchtungen der Behälterwand ausgebildet sein.

Der Hals 21 ist mit dem Körper 13 verbunden, wobei es zur Vergrösserung des Fassungsvermögens des Behälters 11 oder aus anderen Gründen (Ästhetik etc.) nützlich sein kann, wenn der Körper 13 einen anderen, insbesondere einen grösseren Querschnitt aufweist, als der Hals 21 (Querschnitt jeweils quer zur Mittelachse 18 des Halses 21 und Behälters 11). In diesem Fall verjüngt sich der Körper 13 zum Hals 21 hin, wobei der sich verjüngende Bereich des Körpers 13 als Schulter 17 bezeichnet wird. Der Körper 13 kann prinzipiell beliebig geformt sein, weist aber oft eine im Wesentlichen zylindrische, ovale und/oder drehsymmetrische Form auf.

Zweckmässigerweise ist die Ausgiessöffnung 23 gegenüber dem Boden 15 des Behälters 11 angeordnet, wobei der Boden 15 einen Teil des Körpers 13 bildet, der so geformt ist, dass der Behälter 11 auf dem Boden 15 stehend stabil positionierbar ist.

Der Hals 21 kann eine andere Form als der Körper 13 aufweisen, wobei eine zylindrische, insbesondere eine kreiszylindrische Form das Anbringen von Befestigungsmitteln für einen Deckel (z.B. Gewinde 25) erleichtert.

Von besonderer Bedeutung ist das Vorhandensein eines sogenannten Supportrings 31. Die Bezeichnung "Supportring" weist einerseits darauf hin, dass er üblicherweise im Wesentlichen kreisringförmig ist, wobei er am Hals 21 angeordnet und mit diesem verbunden ist. Er umgibt den Hals 21 und erstreckt sich vom Hals ausgehend radial nach aussen. Andererseits ist die Bezeichnung ein Hinweis auf die Funktion des Supportrings 31. Dieser dient der automatischen Handhabung des Behälters 11, beispielsweise der Ausrichtung, dem Transport oder der Sortierung. Der äussere Rand des Supportrings kann aber statt kreisbogenförmig durchaus auch zum Beispiel abgeflacht sein.

Der Behälter 11 kann auf dem Supportring 31 aufliegend transportiert werden, wobei eine diesem Zweck dienende Transportvorrichtung (z.B. wie in der Einleitung beschrieben) meist zwei parallel angeordnete und/oder verlaufende Stützelemente (z.B. Schienen oder Bänder) aufweist, die den Behälter 11 auf zwei gegenüberliegenden Seiten am Supportring 31 berühren, insbesondere stützen. Es ist deshalb wünschenswert, dass der Supportring 31 eine ausreichende Stabilität aufweist, um das Gewicht des Behälters 11 mit oder ohne Inhalt tragen zu können.

Supportringe sind oft massiv ausgebildet und daher ausreichend stabil. Bei blasgeformten Behältern 11 kann jedoch auch der Supportring 31 blasgeformt sein, was gemäss der vorliegenden Erfindung vorgesehen ist. Der Supportring 31 ist in diesem Fall als innen hohle Ausbuchtung der Behälterwand ausgebildet. Solche blasgeformte Supportringe weisen im Vergleich zu massiven Supportringen eine verminderte Stabilität auf.

Zur Erhöhung seiner Stabilität weist der Supportring 31 gemäss der in den Abbildungen dargestellten Variante mehrere Einbuchtungen 41 auf, die sich vom äusseren Rand des Supportrings 31 in Richtung des Halses 21 (d.h. auf den Hals zu) erstrecken und den Supportring 31 so in Segmente 33 unterteilen.

Ein Segment 33 wird dabei jeweils von zwei einander auf dem Supportring 31 benachbarten Einbuchtungen 41 definiert und/oder begrenzt. Die Segmente 33 können jeweils denselben Anteil am Umfang des Supportrings 31 einnehmen und/oder gleich lang sein, wie dies beim gezeigten Beispiel der Fall ist. Sie könnten jedoch auch unterschiedlich lang sein. Dasselbe gilt für die Einbuchtungen 41.

Es ist bevorzugt, wenn die Einbuchtungen 41 im Durchschnitt einen geringeren Anteil am Umfang des Supportrings 31 einnehmen oder eine geringere Länge aufweisen, als die Segmente 33. Sind die Segmente 33 zu kurz, so kann die Funktion des Supportrings 33 beeinträchtigt sein. Es ist von Vorteil, wenn von zwei beliebigen parallelen Tangentialebenen an den Hals 21 beide immer den Supportring 31 und/oder ein Segment 33 schneiden. Dadurch ist sichergestellt, dass der Supportring 31 auf zwei gegenüberliegenden Seiten des Halses 21 über den Hals 21 vorsteht und somit z.B. mit einer Transportvorrichtung zusammenwirken kann.

Die Einbuchtungen 41 erstrecken sich über die gesamte Höhe des Supportrings 31, also von der Oberseite 35 bis zur Unterseite 37 des Supportrings 31, und verringern dadurch am Ort der Einbuchtungen 41 die Breite des Supportrings 31 (die Breite des Supportrings definiert sich analog zu einem Kreisring durch die Differenz aus dem Radius des Aussenkreises (R) und dem Radius des Innenkreises (r), also (R - r); die Höhe des Supportrings entspricht seiner Ausdehnung in Richtung der Mittelachse 18, also der Achse rechtwinklig zur Kreisebene durch die Mittelpunkte des Aussenkreises und des Innenkreises; diese entspricht der Mittelachse des Halses 21). Unter anderem erlaubt dies das Abfliessen von Wasser von der Oberseite 35 des Supportrings 31.

Die Einbuchtungen 41 erstrecken sich über die gesamte Breite des Supportrings 31, d.h. bis zum Hals 21. Dies ist jedoch nicht zwingend notwendig, d.h. die Einbuchtungen könnten sich z.B. auch nur über höchstens 90, 70 oder 60 Prozent und/oder mindestens 20, 30 oder 40 Prozent der Breite des Supportrings 31 erstrecken und die Breite des Supportrings 31 an den Stellen, an denen sich Einbuchtungen befinden, um die genannten prozentualen Anteile verringern.

Die in Richtung des Halses 21 (d.h. auf den Hals 21 zu) verlaufenden Seiten 43 der Einbuchtungen 41 tragen zur Stabilität des Supportrings 31 bei und zwar umso mehr, je flacher sie sind. Deshalb ist es bevorzugt, wenn die Seiten 43 in eine Richtung parallel zur Mittelachse 18 über mindestens 20, 30 oder 50 Prozent der Höhe des Supportrings 31 parallel zueinander und/oder in einem Winkel zwischen 80 und 100 Grad zur Oberseite und/oder Unterseite des Supportrings 31 verlaufen. Bevorzugt sind die Seiten 43 über mindestens 20, 30 oder 50 Prozent der Höhe des Supportrings 31 nur in Richtungen gekrümmt, die parallel zur Ebene, in der der Supportring 31 liegt, verlaufen.

Es können 2, 3, 4 oder mehr der beschriebenen Einbuchtungen 41 am Supportring 31 vorgesehen sein, wobei sie vorzugsweise in regelmässigen Abständen voneinander entlang des Umfangs des Supportrings 31 angeordnet sind, wie dies in den Abbildungen gezeigt ist. Dies ist jedoch nicht zwingend.

### Bezugszeichenliste:

- 11: Behälter
- 13: Körper
- 15: Boden
- 17: Schulter
- 18: Mittelachse
- 21: Hals
- 23: Ausgiessöffnung
- 25: Gewinde
- 31: Supportring
- 33: Segmente
- 35: Oberseite
- 37: Unterseite
- 41: Einbuchtung
- 43: Seiten der Einbuchtungen

## Patentansprüche

1. Blasgeformter Behälter (11) mit einem Körper (13) und einem Hals (21), wobei der Hals (21) eine Ausgiessöffnung (23) und einen blasgeformten Supportring (31) aufweist, wobei der Supportring (31) als innen hohle Ausbuchtung der Behälterwand ausgebildet ist und über seine gesamte sich im Wesentlichen in Längserstreckungsrichtung des Halses (21) erstreckende Höhe eine oder mehrere Einbuchtungen (41) aufweist, die sich vom äusseren Rand des Supportrings (31) in Richtung des Halses (21) erstrecken, **dadurch gekennzeichnet, dass** sich die eine oder mehr Einbuchtungen (41) über die gesamte Breite des Supportrings (31) bis zum Hals (21) erstrecken, wobei an den Stellen, an denen sich die eine oder mehreren Einbuchtungen (41) bis zum Hals (21) erstrecken, die Innenkontur des Behälters (11) zumindest im Wesentlichen fluchtend mit in Längserstreckungsrichtung des Halses benachbarten Stellen ist.

2. Behälter nach Anspruch 1, **dadurch gekennzeichnet, dass** sich jede der genannten Einbuchtungen (41) über höchstens 15 Prozent des Umfangs des Supportrings (31) erstreckt.

3. Behälter nach einem der Ansprüche 1 oder 2, **dadurch gekennzeichnet, dass** sich im Wesentlichen in Längserstreckungsrichtung des Halses (21) erstreckende Seiten (43) der einen oder mehreren Einbuchtungen (41) wenigstens in Teilbereichen im Wesentlichen plan ausgebildet sind.

4. Behälter nach Anspruch 3, **dadurch gekennzeichnet, dass** der Supportring (31) eine Oberseite (35), die sich im Wesentlichen quer zu der Längserstreckungsrichtung des Halses (21) und der Ausgiessöffnung (23) zugewandt erstreckt, und eine der Oberseite (35) gegenüberliegende Unterseite (37) aufweist, wobei die Seiten (43) der einen oder mehreren Einbuchtungen (41) an die Unterseite (37) und die Oberseite (35) fest verbunden sind und wobei die Übergänge von der Unterseite (37) zu den Seiten (43) der einen oder mehreren Einbuchtungen (41) und die Übergänge von der Oberseite (35) zu den Seiten (43) der einen oder meheren Einbuchtungen (41) im Wesentlichen scharfkantig sind.

5. Behälter nach einem der Ansprüche 2 bis 4, **dadurch gekennzeichnet, dass** die Seiten (43) der einen oder mehreren Einbuchtungen (41)
- einen Winkel mit dem Hals (21) oder bei einem im Wesentlichen runden Hals (21) einer an einer imaginären Schnittlinie der Seite mit dem Hals (21) errichteten Tangentenebene einschliessen, der kleiner als 60 Grad ist und/oder
- einen Winkel einschliessen, der grösser als 60 Grad ist.

6. Behälter nach einem der Ansprüche 1 bis 5, **dadurch gekennzeichnet, dass** der Supportring (31) eine maximale Breite zwischen etwa 2 und etwa 5 Millimetern aufweist.

7. Behälter nach einem der Ansprüche 1 bis 6, **dadurch gekennzeichnet, dass** der Supportring (31) zusätzlich zu einer ersten Einbuchtung (41) weitere 3 bis 7 Einbuchtungen (41) aufweist, wobei die erste Einbuchtung (41) und die weiteren Einbuchtungen (41) vorzugsweise in regelmässigen Abständen entlang des Umfangs des Supportrings (31) angeordnet sind.

8. Behälter nach Anspruch 7, **dadurch gekennzeichnet, dass** die Einbuchtungen (41) sich in Summe über höchstens 40 Prozent des Umfangs des Supportrings (31) erstrecken.

9. Behälter nach einem der Ansprüche 7 bis 8, **dadurch gekennzeichnet, dass** die Form und Anordnung der Einbuchtungen (41) eine Entformung des Behälters (11) aus einer zweiteiligen Blasform erlauben.

## Claims

1. Blow molded container (11) with a body (13) and a neck (21), wherein the neck (21) has a pouring opening (23) and a blow molded support ring (31), wherein the support ring (31) is designed as an internally hollow bulge of the container wall and has one or several recesses over its entire height that extends substantially in the longitudinal extension direction of the neck (21) that extend from the outer edge of the support ring (31) in direction of the neck (21), **characterized in that** the one or more recesses (41) extend over the entire width of the support ring (31) to the neck (21), wherein the inner contour of the container (11) is, at the locations at which the one or more recesses (41) extend to the neck (21), at least substantially flush with locations that are adjacent in the longitudinal extension direction.

2. Container according to claim 1, **characterized in that** each of said recesses (41) extends over maximally 15 per-cent of the circumference of the support ring (31).

3. Container according to one of the claims 1 or 2, **characterized in that** sides (43) of the one or more recesses (41) that extend substantially in the longitudinal extension direction of the neck (21) are designed substantially flat at least in partial areas.

4. Container according to claim 3, **characterized in that** the support ring (31) has an upper side (35) that extends substantially transversely to the longitudinal extension direction of the neck (21) and directed towards the pouring opening (23) and a lower side (37) opposed to the upper side (35), wherein the sides (43) of the one or more recesses (41) are fixedly connected to the lower side (37) and the upper side (35) and wherein the transitions of the lower side (37) to the sides of the one or more recesses (41) and the transitions of the upper side (35) to the sides (43) of the one or more recesses (41) are substantially sharp edged.

5. Container according to one of the claims 2 to 4, **characterized in that** the sides (43) of the one or more recesses (41) form an angle with the neck (21) or, for a substantially round neck (21), a tangent plane set up on an imaginary section line of the side with the neck (21) that is less than 60 degrees and/or form an angle that is greater than 60 degrees.

6. Container according to one of the claims 1 to 5, **characterized in that** the support ring (31) has a maximal width between approximately 2 and approximately 5 millimeters.

7. Container according to one of the claims 1 to 6, **characterized in that** the support ring (31) has, additionally to a first recess (41), further 3 to 7 recesses (41), wherein the first recess (41) and the further recesses (41) are placed preferably at regular distances along the circumference of the support ring (31).

8. Container according to claim 7, **characterized in that** the recesses (41) in total extend over maximally 40 per-cent of the circumference of the support ring (31).

9. Container according to one of the claims 7 to 8, **characterized in that** the shape and arrangement of the recesses (41) make possible a demolding of the container (11) out of a two-part blow mold.

## Revendications

1. Conteneur moulé par soufflage (11) avec un corps (13) et avec un col (21), le col (21) présentant une ouverture de versement (23) et un anneau de support moulé par soufflage (31), l'anneau de support (31) étant configuré comme un renflement creux à l'intérieur de la paroi du conteneur et présentant, sur toute sa hauteur qui s'étend sensiblement dans le sens de l'extension longitudinale du col (21), un ou plusieurs renfoncements (41) qui s'étendent à partir du bord extérieur de l'anneau de support (31) en direction du col (21), **caractérisé en ce que** l'un ou les plusieurs renfoncements (41) s'étendent sur toute la largeur de l'anneau de support (31) jusqu'au col (21), cependant que les contours intérieurs du conteneur (11) sont, aux endroits auxquels l'un ou plusieurs renfoncements (41) s'étendent jusqu'au col (21), tout au moins sensiblement à fleur avec des endroits voisins dans le sens de l'extension longitudinale du col.

2. Conteneur selon la revendication 1, **caractérisé en ce que** chacun desdits renfoncements (41) s'étend sur 15 pour-cent au plus de la circonférence de l'anneau de support (31).

3. Conteneur selon l'une des revendications 1 ou 2, **caractérisé en ce que** des côtés (43) de l'un ou des plusieurs renfoncements (41) qui s'étendent sensiblement dans le sens de l'extension longitudinale du col (21) sont configurés sensiblement plans au moins dans des zones partielles.

4. Conteneur selon la revendication 3, **caractérisé en ce que** l'anneau de support (31) présente un côté supérieur (35) qui s'étend sensiblement transversalement par rapport au sens de l'extension longitudinale du col (21) et en étant tourné vers l'ouverture de versement (23) et un côté inférieur (37) opposé au côté supérieur (35), cependant que les côtés (43) de l'un ou des plusieurs renfoncements (41) sont reliés de manière fixe au côté inférieur (37) et au côté supérieur (35) et cependant que les transitions du côté inférieur (37) aux côtés (43) de l'un ou des plusieurs renfoncements (41) et les transitions du côté supérieur (35) aux côtés (43) de l'un ou des plusieurs renfoncements (41) sont sensiblement à arête vive.

5. Conteneur selon l'une des revendications 2 à 4, **caractérisé en ce que** les côtés (43) de l'un ou des plusieurs renfoncements (41) incluent un angle avec le col (21) ou, pour un col sensiblement rond (21), un plan de tangente agencé sur une ligne de section imaginaire du côté avec le col (21) qui est inférieur à 60 degrés et/ou incluent un angle qui est supérieur à 60 degrés.

6. Conteneur selon l'une des revendications 1 à 5, **caractérisé en ce que** l'anneau de support (31) présente une largeur maximale entre environ 2 et environ 5 millimètres.

7. Conteneur selon l'une des revendications 1 à 6, **caractérisé en ce que** l'anneau de support (31) présente, en plus d'un premier renfoncement (41), 3 à 7 autres renfoncements (41), cependant que le premier renfoncement (41) et les autres renfoncements (41) sont placés de préférence à des distances régulières le long de la circonférence de l'anneau de support (31).

8. Conteneur selon la revendication 7, **caractérisé en ce que** les renfoncements (41) s'étendent quant à leur somme sur au plus 40 pour-cent de la circonférence de l'anneau de support (31).

9. Conteneur selon l'une des revendications 7 à 8, **caractérisé en ce que** la forme et la disposition des renfoncements (41) permettent un démoulage du conteneur d'un moule de soufflage en deux parties.
